## Europäisches Patentamt
## European Patent Office
## Office européen des brevets

(19)

(11) Publication number: **0 005 853**
**B1**

(12)

# EUROPEAN PATENT SPECIFICATION

(45) Date of publication of patent specification: **14.07.82**

(21) Application number: **79101742.9**

(22) Date of filing: **01.06.79**

(51) Int. Cl.³: **G 01 B 11/27, G 01 V 9/04, F 16 P 3/14, G 08 B 13/18**

(54) Light barrier apparatus including an alignment aid.

(30) Priority: **05.06.78 DE 2824582**

(43) Date of publication of application:
**12.12.79 Bulletin 79/25**

(45) Publication of the grant of the patent:
**14.07.82 Bulletin 82/28**

(84) Designated Contracting States:
**BE FR GB IT NL SE**

(56) References cited:
**DE - B - 1 226 002**
**US - A - 3 211 045**
**US - A - 3 531 205**
**US - A - 3 535 539**
**US - A - 3 574 467**

(73) Proprietor: **Erwin Sick GmbH Optik-Elektronik**
**Sebastian-Kneipp-Strasse 1**
**D-7808 Waldkirch (DE)**

(72) Inventor: **Fetzer, Günter**
**Gewerbestrasse 43**
**D-7803 Gundelfingen (DE)**

(74) Representative: **Manitz, Gerhart, Dipl.-Phys.Dr.**
**et al,**
**Robert-Koch-Strasse 1**
**D-8000 München 22 (DE)**

Courier Press, Leamington Spa, England.

## Light barrier apparatus including an alignment aid

The invention relates to light barrier apparatus including an alignment aid. Diverse kinds of light barrier apparatus are known in the art and basically comprise a light transmitter adapted to transmit an operational light beam through a monitored region to a light receiver. The light transmitter and light receiver may either be arranged at opposite ends of the monitored region or at the same end of the monitored region, in which case a retroreflector is provided at the other end of the monitored region to return the operational light beam from the light transmitter to the light receiver. In the latter case the light transmitter and light receiver can either share a common front objective or each be provided with respective front objectives. In an arrangement in which the light receiver and the light transmitter share a common front objective a beam divider is provided inside the light transmitter/receiver unit between the light source and the front objective. The beam divider separates the light beam returned from the retroreflector from the transmitted light beam and directs it onto a photoelectric converter. In an arrangement in which the light receiver and light transmitter have separate front objectives the front objective for the receiver concentrates the received light beam, which reaches the receiver front objective due to the small degree of scattering at the retroreflector, onto the photoelectric converter. In cases in which the light transmitter and light receiver are arranged at the same end of the monitored region one talks of autocollimation light barriers. Their advantage resides in the fact that electrical connections need only be provided on one side of the monitored region whilst it is only necessary to arrange a relatively good retroreflector, the adjustment of which is not critical, on the other side of the monitored region.

If the light transmitter and the light receiver are arranged on opposite sides of the monitored region then each apparatus must be aligned on its own account with the other.

An especial problem with light barriers which operate with invisible light, i.e. for example ultra-violet or infra-red light resides in the alignment or adjustment of the light barrier arrangement. A number of aids and methods already exist which are intended to simplify the work of alignment. All known alignment aids or alignment methods have however the significant disadvantage that they are mostly expensive, require additional auxiliary means and entail relatively expensive or troublesome constructions for the apparatus.

One possibility for aligning a light receiver with a light transmitter is disclosed in US—PS 3 535 539. In this known arrangement the operational light beam passes through the objective lens associated with the receiver and is directed via internal mirrors onto a photoelectric converter. A shield 26 with a reflecting surface is provided directly in front of the photoelectric converter and is spaced from the objective lens by a distance optically equivalent to its focal length. The shield has a central aperture and a series of concentric rings arranged around this central aperture. The central aperture is intended to allow the operational light beam to fall on the photoelectric converter when the light receiver is correctly aligned with the light receiver. The shield, while being located behind the objective lens substantially at the image plane thereof, is angled so that it is able to reflect light incident on its surface out through a window in the side of the light receiver unit. A mirror is pivotally connected to the side of the light receiver unit adjacent the window so that an observer can look at the reflecting surface through the window. If the light receiving unit is incorrectly aligned with the light transmitter unit the operational light beam will fall partially or wholly on the reflecting surface rather than on the photoelectric converter and this fact can be observed by an operator who is then able to correct the position of the light receiver unit using the visible reference feature on the shield, namely the concentric rings, as a guide. The operator is thus able to continue adjusting the light receiver unit until the operational light beam falls solely on the photoelectric converter.

The problem of a system of this kind is that it requires a number of optical components inside the light receiver unit, which must be accurately optically aligned with one another, and also the provision of a special window in the light receiver unit. Furthermore, the system can only be used at the light receiver. This is not particularly problematic with a light transmitter which operates in the visible spectrum because one can readily optically check that light from the light transmitter falls approximately on the front face of the light receiver. There is no suggestion as to how the system could be used with a light transmitter which generates light outside of the visible spectrum. The alignment of such light receivers and transmitters is particularly critical especially when using separate light transmitter and receiver units. It is namely not sufficient to ensure that the light receiver unit is aligned with the objective lens of the light transmitter unit it being also necessary to ensure that the light transmitter unit is also properly aligned with the optical axis of the light barrier. For this purpose alignment aids are required at both the light receiver and the light transmitter.

The problem underlying the present invention is to provide an optical alignment device which can be integrated in light barrier apparatus for use with light in either the visible or invisible parts of the spectrum and which can be realized with a relatively low degree of complexity or expense, but which however fully satisfies the high accuracy requirements for the adjustment. To solve this problem the invention envisages light barrier apparatus including an alignment aid, there being a light transmitter for transmitting operational light through a region monitored by the light barrier apparatus via objective lens means to a light receiver said alignment aid comprising a reflecting surface, in particular a plane mirror adapted to transmit said operational light passing between the light transmitter and the light receiver and bearing a visible reference feature, with said reflecting surface being located behind said objective lens means substantially at the image plane thereof, characterized in that a said reflecting surface is provided in at least one of the light receiver as known per se and the light transmitter and is positioned to reflect visible background light which is received through the objective lens means of the associated one of said light transmitter and said light receiver back through said objective lens means, and that a beam divider is removably disposable in front of the associated objective lens to reflect, in a sideways direction, at least a part of the background light reflected at the or each said reflecting surface.

The reflecting surface is preferably a plane mirror so as to maximize the amount of background light reflected back through the associated objective lens.

The beam divider can be a physical dividing mirror or it can also be a mirror arranged to effect geometric division; for example a plane mirror which only intercepts a part of the light beam.

The plane mirror arranged behind the front objective has, in accordance with a first embodiment, a central unmirrored region whilst, in a second embodiment which operates with invisible radiation, the plane mirror is a dichroic mirror which reflects the visible radiation necessary for alignment purposes but however transmits the invisible operational radiation.

The light transmitter and the light receiver can either be arranged at the same end of the monitored region or at opposite ends thereof.

To the extent that the light transmitter and light receiver are arranged at opposite ends of the monitored region the light receiver can also be provided with an alignment aid in analogous fashion to the light transmitter so that the light receiver can be exactly aligned with the exit aperture of the light transmitter.

In accordance with the invention the front objective provided in the light transmitter or in the light receiver is thus twice used for the alignment in the manner of a telescopic sight. In other words the front objective of the light barrier is simultaneously the objective and the eye piece of a telescopic sight with a telescopic enlargement of one as, in this case, the focal lengths of the objective and eye piece are the same.

With reference to the beam divider provided in front of the front objective it is of decisive advantage that the associated beam divider does not itself need to be itself aligned in any particular manner. The viewing direction with reference to the axis of the light barrier can be chosen as desired and no particular requirements need to be set on the optical quality. This signifies that, in the simplest case, a normal pocket mirror suitably arranged for reflecting the visible light is sufficient for carrying out the required beam splitting.

The embodiment of the plane mirror behind the front objective at the image plane, i.e. at the location of the real image, provides the necessary target mark for alignment as, in the plane of this mirror, the image of the object onto which the light barrier should be directed is provided in real form. The target mark can have all the known forms used for telescopic sights. It can for example be a central point, a pair of cross wires or similar.

The especial advantage of the apparatus of the invention is that a telescope with a large entry aperture is provided because of the arrangement of the reflecting surface or plane mirror behind the front objective so that the target point (reflector or transmitter or receiver) as seen via the beam divider can be recognized without a source of stray light. If the light barrier is placed in a relatively dark location then the target point can be illuminated from outside the light barrier by means of a simple table lamp or the like which is possible without great expenditure and without having to encroach on the beam path of the light barrier. As, during the alignment, neither the reflector nor the transmitter nor the receiver is masked by a stray light source the operation of the light barrier can be maintained even during the alignment process. In this manner it is possible to check the alignment of a light barrier which is in operation without significantly disturbing the operation of the light barrier.

The invention will now be described in the following by way of example only and with reference to the accompanying drawings in which are shown:

Fig. 1 the schematic ray path of light barrier apparatus provided with an alignment aid in accordance with the invention and in which the light transmitter and the light receiver are arranged on opposite sides of the region monitored and which in addition shows, as an alternative, a retroreflector indicated in broken lines, and

Fig. 2 is a view in the direction II—II of Fig. 1.

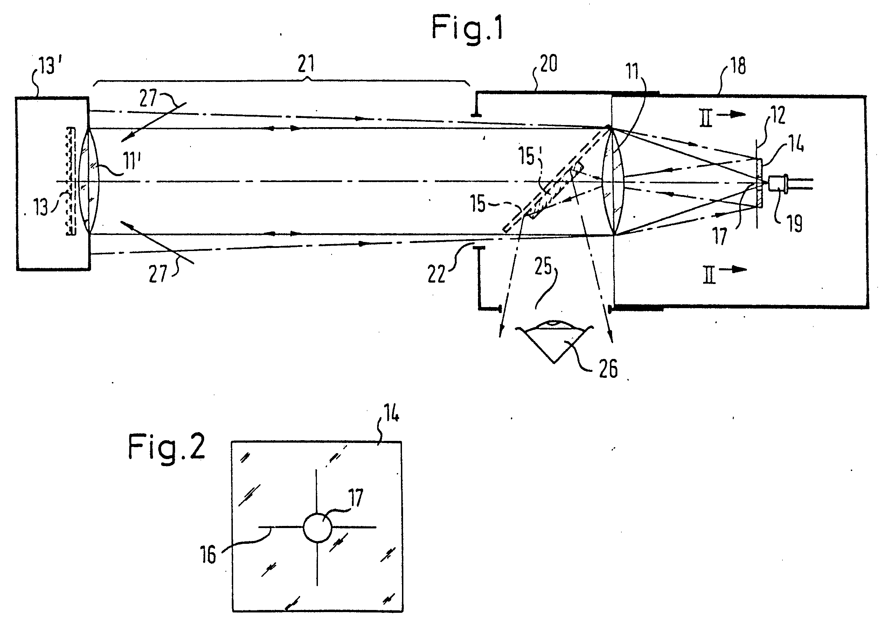

As seen in the drawing a gallium arsenide diode 19 is arranged in a housing 18 and radiates through the unmirrored central region 17 of a plane mirror 14. The reflecting surface of the plane mirror 14 is located on the side remote from the diode 19. The light beam leaving the region 17 is received by the front objective lens means (transmitting lens) 11 (hereinafter simply front objective 11) of the light transmitter which directs an essentially parallel light beam through the monitored region 21 to the front objective lens means 11 (hereinafter simply front objective 11') of a receiver 13' arranged on the opposite side of the monitored region 21. If, in a modification not shown, the light receiver is united with the light transmitter in a single housing (autocollimation) then the front objective 11' would be replaced by a retroreflector 13 which is shown in broken lines in Fig. 1.

An accessory device 20 with a light transmitting aperture 22 is plugged onto the housing 18 directly in front of the front objective 11. A partially transmitting mirror 15 is arranged within the accessory 20 which transmits part of the light for the light barrier but which however partially reflects the light reflected at the plane mirror 14 sideways through an opening 25 in the accessory 20. For observation purposes the human eye 26 can look through the opening 25. In place of the partially transmitting mirror 15 which receives the entire cross-section of the light beam it is also possible to arrange a plane mirror 15' in front of the front objective 11 which only intercepts a portion of the cross-section of the beam.

In the simplest cast it is sufficient if a mirror 15' arranged in a suitable holder is simply used for the purposes of adjustment. The accessory device 20 having the opening 25 is then not necessary as the mirror 15' can be viewed from the side without hindrance.

Thus both a physical and a geometric beam division is possible at this position.

On account of the relatively large length of the monitored region 21 the plane mirror 14 is spaced from the front objective 11 by a distance equivalent to the focal length thereof. Strictly speaking however the mirrored surface of the plane mirror 14 is disposed at the location 12 of the real image which is developed by the front objective 11 from the reflector 13 or objective 11' which is arranged at the end of the monitored region 21, i.e. at the image plane of the front objective 11. The plane mirror 14 is preferably at right angles to the optical axis.

A pair of cross wires 16 is located at the plane mirror 17 arranged about its central transmitting aperture as can be seen from Fig. 2.

The manner of operation of the described light barrier is as follows:

The one diode 19 which transmits light outside of the visible spectrum can be at once set into operation without affecting the alignment operations. The light generated by the diode 19 is not necessary for the adjustment procedure. For this purpose the visible background light which is schematically illustrated at 27 is sufficient and only needs to feebly illuminate the reflector 13 or the objective 11' and its background. Although additional external light sources can also be used to generate the background light 27 it is significant that these light sources do not need to be arranged in any particular manner in the vicinity of the beam path of the light barrier.

A real image of the reflector 13 or objective 11' is generated via the front objective 11 on the surface of the plane mirror 14 independently from the light from the light source 19 which lies outside of the visible spectrum. This real image is viewed similarly to the intermediate image of a telescope system by the eye 26 via the beam divider 15 (15') and the front objective 11 which operates as an eye piece. Thus the pair of crossed wires 16 and the image of the reflector 13 or the objective 11 are simultaneously viewed. By suitable pivoting of the housing 18 the real image of the reflector 13 or objective 11' which exists at the location 12 can be brought into the desired alignment with the pair of cross wires 16. The light barrier is able as a result to continue operating in completely normal fashion. The light barrier is adjusted as soon as the image of the reflector 13 or the objective 11' is aligned in the desired position with the crossed wires 16.

This alignment can basically also be used for a light source 19 which transmits visible light, however the light barrier must then be switched off during the adjustment procedure in order to avoid interference from the light source 19; this is critical when, in the case of true autocollimation, the transmitter is to be aligned.

The described adjustment procedure can also be carried out for a light receiver 13' in which case a photoelectric converter should be regarded as taking the place of the diode 19. All other features remain the same. In this case the light exit aperture of the light transmitter has to be brought into alignment with the crossed wires 16 by pivoting of the receiver 13' during the adjustment.

Preferably an alignment aid comprising the parts 14 and 15 is located both at the light transmitter and also at the light receiver so that the light receiver 13' can be aligned relative to the light transmitter in completely analogous manner.

A plane mirror with a continuous mirror layer can also be used in place of the plane mirror with a central light transmitting region 17. In this case the continuous mirror layer must be of the dichroic type so that it transmits the light for the light barrier which lies outside of the visible spectrum and only reflects the visible light necessary for alignment purposes.

The plane mirror arranged behind the front objective can also be a reflecting layer deposited on an existing filter and/or simultaneously carry out a stop function for limiting the field of view of the light barrier.

As the mirror 15 or 15' can be plugged onto the light receiver or transmitter it can be simply removed after use so that it forms neither an optical nor a constructional obstruction.

It will be appreciated by those skilled in the art that further modifications can be made to the present invention without departing from the scope of the present teaching.

## Claims

1. Light barrier apparatus including an alignment aid, there being a light transmitter (18) for transmitting operational light through a region (21) monitored by the light barrier apparatus via objective lens means (11; 11') to a light receiver (13') said alignment aid comprising a reflecting surface, in particular a plane mirror (14) adapted to transmit said operational light passing between the light transmitter (18) and the light receiver (13') and bearing a visible reference feature, with said reflecting surface being located behind said objective lens means (11; 11') substantially at the image plane thereof, characterized in that a said reflecting surface (14) is provided in at least one of the light receiver (13'), as known per se, and the light transmitter (18) is positioned to reflect visible background light which is received through the objective lens means (11; 11') of the associated one of said light transmitter (18) and said light receiver (13') back through said objective lens (11; 11'), and that a beam divider (15; 15') is removably disposable in front of the associated objective lens (11; 11') to reflect in a sideways direction at least a part of the background light reflected at the or each said reflecting surface (14).

2. Light barrier apparatus according to claim 1 and characterized in that the light transmitter (18) is arranged at one end of the monitored region (21) and that the light receiver (13') is located at the other end of the monitored region without an intermediate reflector.

3. Light barrier apparatus according to claim 1 and characterized in that the light transmitter (18) and the light receiver (13') are located at the same end of the monitored region and that a reflector (13) is provided at the other end of the monitored region for directing light from the transmitter back to the receiver.

4. Light barrier apparatus according to claim 3 and characterized in that the light transmitter (18) is united with the light receiver (13') in a single housing and that said light receiver (13') and light transmitter (18) share a common front objective (11).

5. Light barrier apparatus according to any of the preceding claims and characterized in that the beam divider is a physical dividing mirror (15) and in particular a partially transmitting mirror.

6. Light barrier apparatus according to any of claims 1 to 4 and characterized in that the beam divider is a mirror (15') arranged to effect geometric division and in particular a plane mirror arranged to intercept only a central part of the light beam.

7. Light barrier apparatus according to any one of the preceding claims and characterized in that the or each said reflecting surface is a plane mirror (14) having a central unmirrored region (17).

8. Light barrier apparatus according to any one of the claims 1 to 4 and which operates with invisible radiation and characterized in that the or each said reflecting surface is a dichroic mirror (14) which reflects the visible radiation necessary for alignment but however transmits the invisible operational radiation.

9. Light barrier apparatus according to any of the preceding claims and characterized in that the visible reference feature is a reference mark (16) centrally arranged at the reflecting surface (14), in particular a pair of cross wires.

10. Light barrier apparatus according to either of claims 7 or 9 and characterized in that the unmirrored region (17) is circular.

11. Light barrier apparatus according to any one of the preceding claims and characterized in that the beam divider (15) can be plugged onto the light transmitter or the light receiver.

12. Light barrier apparatus according to claim 2 characterized in that both said light transmitter (18) and said light receiver (13') are provided with a said reflecting surface (14).

13. Light barrier apparatus according to any one of the preceding claims characterized in that said operational light lies outside of the visible system.

## Revendications

1. Appareil d'arrêt de lumière comprenant un auxiliaire d'alignement, un émetteur (18) de lumière étant destiné à émettre une lumière opérationnelle à travers une région (21) contrôlée par l'appareil d'arrêt de lumière par l'intermédiaire d'un moyen à lentilles d'objectif (11; 11') vers un récepteur de lumière (13'), ledit auxiliaire d'alignement comprenant une surface réfléchissante, en particulier un miroir plan (14) conçu pour transmettre ladite lumière opérationnelle passant entre l'émetteur de lumière (18) et le récepteur de lumière (13') et portant une caractéristique de référence visible, ladite surface réfléchissante étant située en arrière dudit moyen à lentilles d'objectif (11; 11') sensiblement à son plan image, caractérisé en ce que ladite surface réfléchissante (14) est située dans au moins l'un des récepteur de lumière (13'), comme connu en soi, et émetteur de lumière (18) et est positionnée pour réfléchir la lumière de fond visible qui est reçue à travers le moyen à lentilles d'objectif (11; 11') de celui, associé, desdits émetteur de lumière (18) et récepteur de lumière (13') en revenant à travers lesdites lentilles d'objectif (11; 11'), et en ce qu'un diviseur de faisceau (15; 15') peut être disposé de manière amovible en avant de la lentille d'objectif associée (11; 11') pour réfléchir dans une direction latérale au moins une partie de la lumière de fond réfléchie sur ladite ou chaque surface réfléchissante (14).

2. Appareil d'arrêt de lumière selon la revendication 1 et caractérisé en ce que l'émetteur de lumière (18) est agencé à une extrémité de la région contrôlée (21) et en ce que le récepteur de lumière (13') est situé à l'autre extrémité de la région contrôlée sans réflecteur intermédiaire.

3. Appareil d'arrêt de lumière selon la revendication 1 et caractérisé en ce que l'émetteur de lumière (18) et le récepteur de lumière (13') sont situés à la même extrémité de la région contrôlée et en ce qu'un réflecteur (13) est placé à l'autre extrémité de la région contrôlée pour renvoyer la lumière de l'émetteur au récepteur.

4. Appareil d'arrêt de lumière selon la revendication 3 et caractérisé en ce que l'émetteur de lumière (18) est solidarisé au récepteur de lumière (13') dans un boîtier unique et en ce que lesdits recepteur de lumière (13') et émetteur de lumière (18) so partagent un objectif frontal commun (11).

5. Appareil d'arrêt de lumière selon l'une quelconque des revendications précédentes et caractérisé en ce que le diviseur de faisceau est un miroir physique de division (15) et en particulier un miroir à transmission partielle.

6. Appareil d'arrêt de lumière selon l'une quelconque des revendications 1 à 4 et caractérisé en ce que le diviseur de faisceau est un miroir (15') agencé pour effectuer une division géométrique et un particulier un miroir plan agencé pour intercepter seulement une partie centrale du faisceau lumineux.

7. Appareil d'arrêt de lumière selon l'une quelconque des revendications précédentes et caractérisé en ce que ladite ou chaque surface réfléchissante est un miroir plan (14) ayant une région centrale (17) ne formant pas miroir.

8. Appareil d'arrêt de lumière selon l'une quelconque des revendications 1 à 4 et qui fonctionne avec un rayonnement invisible et caractérisé en ce que ladite ou chaque surface réfléchissante est un miroir dichroïque (14) qui réfléchit le rayonnement visible nécessaire pour l'alignement, mais cependant transmet le rayonnement opérationnel invisible.

9. Appareil d'arrêt de lumière selon l'une quelconque des revendications précédentes et caractérisé en ce que la caractéristique de référence visible est une marque de référence (16), agencée centralement sur la surface réfléchissante (14), en particulier deux fils métalliques croisés.

10. Appareil d'arrêt de lumière selon l'une des revendications 7 ou 9 et caractérisé en ce que la région (17) ne formant pas miroir est circulaire.

11. Appareil d'arrêt de lumière selon l'une quelconque des revendications précédentes et caractérisé en ce que le diviseur de faisceau (15) peut être branché sur l'émetteur de lumière ou sur le récepteur de lumière.

12. Appareil d'arrêt de lumière selon la revendication 2 et caractérisé en ce qu'à la fois ledit émetteur de lumière (18) et ledit récepteur de lumière (13') présentent une dite surface réfléchissante (14).

13. Appareil d'arrêt de lumière selon l'une quelconque des revendications précédentes et caractérisé en ce que ladite lumière opérationnelle est située à l'extérieur du système visible.

**Patentansprüche**

1. Lichtschrankenvorrichtung mit einer Ausrichthilfe, bei der ein Lichtsender (18) zum Aussenden von Betriebslicht durch eine von der Lichtschranke überwachte Strecke (21) über Objektivlinseneinrichtungen (11, 11') zu einem Lichtempfänger (13') vorgesehen ist und die Ausrichthilfe eine reflektierende Oberfläche, insbesondere einen für das zwischen dem Lichtsender (18) und dem Lichtempfänger (13') hindurchtretende Betriebslicht durchlässigen Planspiegel (14) mit einer sichtbaren Bezugsmarke umfaßt, wobei die reflektierende Oberfläche hinter der Objektivlinseneinrichtung (11, 11') im wesentlichen an deren Bildebene angeordnet ist, dadurch gekennzeichnet, daß die reflektierende Oberfläche (14) mindestens in einem der Bauteile Lichtempfänger (13'), wie an sich bekannt, und/oder Lichtsender (18) vorgesehen und so angeordnet ist, daß sie durch die dem betreffenden Lichtsender (18) oder -empfänger (13) zugeordnete Objektivlinseneinrichtung (11, 11') einfallendes Umgebungslicht durch diese Objektivlinse (11, 11') zurück reflektiert, und daß vor der zugeordneten Objektivlinse (11, 11') ein Strahlenteiler (15, 15') entfernbar einbringbar ist, um mindestens einen Teil des an der oder jeder reflektierenden Oberfläche (14) reflektierten Hintergrundlichtes seitlich herauszuspiegeln.

2. Lichtschrankenvorrichtung nach Anspruch 1, dadurch gekennzeichnet, daß der Lichtsender (18) an einem Ende der überwachten Strecke (21) angeordnet und der Lichtempfänger (13') an dem anderen Ende der überwachten Strecke ohne Zwischenreflektor angeordnet sind.

3. Lichtschrankenvorrichtung nach Anspruch 2, dadurch gekennzeichnet, daß der Lichtsender (18) und der Lichtempfänger (13') am gleichen Ende der überwachten Strecke (21) angeordnet sind, und daß ein Reflektor (13) an dem anderen Ende der überwachten Strecke zum Zurückleiten des Lichtes vom Sender zurück zum Empfänger vorgesehen ist.

4. Lichtschrankenvorrichtung nach Anspruch 3, dadurch gekennzeichnet, daß der Lichtsender (18) mit dem Lichtempfänger (13') in einem einzigen Gehäuse untergebracht ist und daß der Lichtempfänger (13') und der Lichtsender (18) ein gemeinsames Frontobjektiv (11') besitzen.

5. Lichtschrankenvorrichtung nach einem der vorangehenden Ansprüche, dadurch gekennzeichnet, daß der Strahlteiler ein physikalischer Teilerspiegel (15), insbesondere ein teildurchlässiger Spiegel ist.

6. Lichtschrankenvorrichtung nach einem der Ansprüche 1—4, dadurch gekennzeichnet, daß der Strahlteiler ein geometrischer Teilerspiegel (15′), insbesondere ein nur einen zentralen Teil des Lichtstrahles einfangender Planspiegel ist.

7. Lichtschrankenvorrichtung nach einem der vorangehenden Ansprüche, dadurch gekennzeichnet, daß die oder jede reflektierende Oberfläche ein Planspiegel (14) mit einem zentralen unverspiegelten Bereich (17) ist.

8. Lichtschrankenvorrichtung nach einem der Ansprüche 1—4, der mit unsichtbarer Strahlung arbeitet, dadurch gekennzeichnet, daß die oder jede reflektierende Oberfläche ein dichroitischer Spiegel (14) ist, der die zum Ausrichten benötigte sichtbare Strahlung reflektiert, jedock die unsichtbare Betriebsstrahlung durchläßt.

9. Lichtschrankenvorrichtung nach eine der vorangehenden Ansprüche, dadurch gekennzeichnet, daß die sichtbare Bezugsmarke eine zentral an der reflektierenden Oberfläche (14) angeordnete Bezugsmarke (16), insbesondere eine Fadenkreuz ist.

10. Lichtschrankenvorrichtung nach einem der Ansprüche 7 oder 9, dadurch gekennzeichnet, daß der unverspiegelte Bereich (17) kreisförmig ist.

11. Lichtschrankenvorrichtung nach einem der vorangehenden Ansprüche, dadurch gekennzeichnet, daß der Strahlenteilen (15) auf den Lichtsender und/oder de Lichtempfänger aufsteckbar ist.

12. Lichtschrankenvorrichtung nach Anspruch 2, dadurch gekennzeichnet, daß der Lichtsender (18) und der Lichtempfänger (13′) je mit einer reflektierenden Oberfläche (14) versehen sind.

13. Lichtschrankenvorrichtung nach einem der vorangehenden Ansprüche, dadurch gekennzeichnet, daß das Betriebslicht außerhalb des sichtbaren Bereiches liegt.

Fig.1

Fig.2

0 005 853